# EUROPEAN PATENT SPECIFICATION

(11) **EP 1 028 293 B1**
(45) Date of publication and mention of the grant of the patent: **07.08.2002**
(21) Application number: 99830075.0
(22) Date of filing: 12.02.1999
(51) Int. Cl.: F24D 3/08, F24D 3/10, F28D 1/06, F28D 7/02

(54) **Integrated heat exchange and storage unit for water heating apparatus, method for its manufacture and water heating apparatus including said unit**
Wärmetausch- und Speichereinheit für Wasserheizer, Verfahren zu deren Herstellung und Wasserheizer mit so einer Einheit
Unité pour échange et accumulation de chaleur pour chauffe-eau, procédé de fabrication et chauffe-eau avec une telle unité

(43) Date of publication of application: 16.08.2000
(73) Proprietor: Scanferla, Giorgio, 36061 Bassano del Grappa (VI) (IT)
(72) Inventor: Scanferla, Giorgio, 36061 Bassano del Grappa (VI) (IT)
(74) Representative: Bottero, Claudio

(56) References cited:
- EP-A- 0 355 881
- EP-A- 0 670 459
- EP-A- 0 759 526
- FR-A- 2 304 884

## Description

The present invention relates to an integrated heat exchange and storage unit adapted to be used in water heating apparatuses.

The invention also relates to a method for manufacturing the aforementioned integrated unit, as well as to a water heating apparatus equipped with said unit and particularly, but not exclusively, to a boiler of the so called combined type for domestic use.

In the following description and in the subsequent claims, the term: boiler of the so called combined type, is used to indicate a boiler suitable for delivering both hot water for space heating or primary water, and hot water for sanitary use.

As is known, in the field of water heating apparatuses and in particular of the boilers of the so called combined type for domestic use, the need is increasingly felt of ensuring on the one hand a prompt delivery of sanitary water at the desired temperature and, on the other hand, of producing more and more compact, lightweight and inexpensive heaters.

In order to comply with this need, the so called storage boilers have gained a wider acceptance in the field, wherein a certain amount of ready-to-use sanitary water or water for space heating is stored in a tank, which in some cases can also simultaneously accomplish the task of an expansion tank, water which is used for providing in a relatively short time hot water for sanitary use.

Thus, for example, a boiler provided with a storage tank of hot primary or space heating water mounted upstream of a water-water exchanger for the production of hot sanitary water is described in German Patent Application DE 42 36 967, whereas German Utility Model DE-U-91 15 237 and European Patent Application EP 0 692 682 describe boilers wherein the storage tank of the hot primary water also simultaneously accomplishes the task of expansion tank.

In order to solve the problem of a prompt delivery of hot sanitary water it has been suggested by European patent application EP 0 355 881 to arrange a hot water reservoir between the sanitary water heat exchanger and a return pipe to the burner of the boiler. According to this reference, the tap-water heat exchanger and the hot water reservoir may be combined in one device into a heat exchanger unit, which comprises a closed outer tank and an inner tank arranged therein and a helically wound tube arranged therebetween.

In the alternative, it has also been suggested by European patent application EP 0 759 526 to provide a hot water accumulator, particularly for user water heating in a central heating installation, with a heat exchanger in the form of a pipe coil and connectable with a conduit network. According to this reference, the heat exchanger may be supported in the hot water accumulator.

The technical problem underlying the present invention is therefore that of devising and providing a storage unit adapted to be used in water heating apparatuses, in particular but not exclusively, boilers of the so called combined type for domestic use, which allows to comply in all aspects with the above mentioned need of ensuring a prompt delivery of hot sanitary water and to have at the same time the smallest size, the minimum weight and the lowest cost compatible with the performances required by the water heating apparatus itself.

According to a first aspect of the invention, this problem is solved by an integrated heat exchange and storage unit for a water heating apparatus as defined in attached claim 1.

According to the invention, the desired weight, size and cost reduction of the water heating apparatus is achieved by providing therein an integrated unit in which the water-water heat exchanger adapted to produce the hot sanitary water and the storage tank of the hot primary water are reciprocally associated from a structural point of view, besides being co-operating with one other from a functional point of view.

Advantageously, the integrated unit according to the invention allows to achieve the desired space, weight and cost reduction thanks to a substantial simplification and reduction of the pipe fittings required for hydraulically connecting the integrated storage and heat exchange unit with the remaining parts of the water heating apparatus and thanks to a substantial material savings in the production of the integrated unit itself.

According to the invention, the water-water heat exchanger is at least partly integrally formed within the containing casing of the storage tank of the hot primary water, so as to further reduce both the overall size of the integrated unit and the consumption of material required for manufacturing the unit itself.

According to the invention, the water-water heat exchanger comprises an inner wall integrally formed in a first cap of the containing casing of the tank and an outer wall integrally formed in an essentially tubular element, coaxially fixed to the first cap.

Preferably, furthermore, the water-water heat exchanger is of the so called double-pipe type and comprises a pair of coaxial outer and, respectively, inner tubular ducts spirally wound on the containing casing of the storage tank of the hot primary water. Advantageously, the sanitary water to be heated flows in the inner tubular duct whereas the hot primary water for space heating flows in the annular hollow space defined between the two coaxial ducts.

In this way, it is advantageously possible to achieve a high heat exchange efficiency between the hot primary water for space heating and the sanitary water to be heated with the minimum surface area required for realizing the desired heat exchange thanks to the possibility of flowing the two fluids in countercurrent with respect to each other and at high velocity.

Advantageously, furthermore, the water-water heat exchanger has a great surface area exposed to the outside and allows the water stored within the same to be quickly cooled down each time the heat exchanger is in stand-by, thus reducing to the minimum the formation of limestone deposits on the surfaces of the inner tubular duct wherein the sanitary water flows and due to prolonged stagnation of hot water.

In such preferred embodiment, the inner and outer walls of the water-water heat exchanger are provided with respective grooves, essentially semicircular and facing each other.

Preferably, the facing grooves of the inner and outer walls of the water-water heat exchanger are formed along a substantially helicoidal path and define the outer tubular ducts of the water-water heat exchanger.

In this way, it is advantageously possible to have a heat exchanger that, while having a suitable development of the fluid path for ensuring a satisfactory heat exchange between the hot water for space heating and the sanitary water to be heated, it possesses at the same time a reduced overall size along a longitudinal direction and preferably not greater than the length of the first cap of the containing casing of the storage tank for the hot primary water.

In order to ensure the correct positioning of the inner tubular duct and ensure a satisfactory coaxiality between the two ducts, the essentially semicircular grooves formed on the inner and/or outer walls of the heat exchanger are provided with a plurality of supporting ribs, having substantially a saddle-like shape and pitchwise spaced from one another.

Preferably, such ribs form an angle comprised between 20° and 45° and, still more preferably, an angle equal to about 30°, with respect to a longitudinal axis of the outer tubular duct of the water-water heat exchanger.

Advantageously, furthermore, the above mentioned ribs contribute both to further stiffen the inner and/or outer walls of the heat exchanger, and to further increase the turbulence of the hot primary water for space heating, flowing in the outer tubular duct, thus optimizing heat exchange efficiency.

Preferably, the means for putting the water-water heat exchanger in fluid communication with the storage tank comprises:
i) a channel defined between the outer wall of the heat exchanger and a wall of the tank, and
ii) a plurality of openings formed in said wall of the containing casing at one end of said channel.

Advantageously, said means is integrally formed within the integrated unit, so that it is possible to avoid the pipe fittings usually employed in the water heating apparatuses of known type for connecting the storage tank to the water-water heat exchanger.

Advantageously, furthermore, the above mentioned openings have a suitable cross section adapted to reduce the velocity of the water flowing into the storage tank so as not to alter the stratification effect of the water which takes place within the tank itself.

In a preferred embodiment of the invention, the storage tank is provided with means adapted to allow the expansion of the hot primary water stored within the containing casing, so as to eliminate the need of having in the water heating apparatus a separate expansion tank adapted to compensate the thermal expansion of the water circulating within the primary hydraulic circuit.

In a first embodiment, the above mentioned means comprises a membrane, wherein a storage zone of the hot primary water is defined, supported within the storage tank in which the membrane is free to expand or shrink according to the temperature of the hot water stored.

In a second embodiment, such membrane is of the so called bag-type and is removably associated to the containing casing of the tank. In this case, the storage zone of the hot primary water is defined between the bag-type membrane and the containing casing.

In this second case, the integrated unit according to the invention preferably comprises a perforated cap supported within the containing casing of the tank at a predetermined distance from the bag-type membrane, in such a way as to allow the storage in the tank itself of an amount of hot primary water sufficient to achieve the desired prompt delivery of hot sanitary water even in case of leakage from the heating plant.

In both the above mentioned embodiments, the storage tank of the hot primary water for space heating preferably comprises a substantially cylindrical cup interposed between the first cap of the containing casing of the tank and the membrane.

Advantageously, this substantially cylindrical cup accomplishes the double task of permitting the free expansion of the membrane without obstacles of any kind by the grooves provided within the first cap of the storage tank and of contributing to the thermal insulation of the hot primary water stored in the tank itself.

Conveniently, furthermore, such thermal insulation contributes to reduce to the minimum the above mentioned phenomenon of formation of limestone deposits on the surfaces of the inner tubular duct of the water-water heat exchanger and due to an extended stagnation of hot sanitary water.

Preferably, the thermal insulation of the hot primary water stored in the tank of the integrated unit according to the invention may be further improved by providing at least one layer of a thermally insulating coating externally to at least one portion of the containing casing of the tank.

Conveniently, the layer of the thermally insulating coating is provided externally to the second cap of the tank itself so as to thermally insulate the stored hot primary water but not hinder the quick cooling of the water present within the water-water heat exchanger.

According to a second aspect thereof, the present invention provides a method for manufacturing an integrated heat exchange and storage unit for a water heating apparatus as defined in attached claim 15.

According to a third aspect thereof, the present invention provides a water heating apparatus comprising a gas-water heat exchanger for the production of hot primary water for space heating in heat exchange relationship with a second water-water heat exchanger for the production of hot sanitary water by means of a primary hydraulic circuit, characterized in that it comprises, within said primary hydraulic circuit, the integrated heat exchange and storage unit illustrated in the present specification.

Additional features and advantages of the present invention will be more readily apparent from the following description of one embodiment thereof, made solely by way of indication with reference to the attached drawings. In such drawings:
- figure 1 shows a perspective view of a water heating apparatus, in particular a boiler of combined type, incorporating an integrated heat exchange and storage unit according to the invention;
- figure 2 shows an simplified hydraulic diagram of the boiler of figure 1;
- figure 3 shows an elevational view, in an enlarged scale and in partial longitudinal section, of a preferred embodiment of an integrated heat exchange and storage unit according to the invention;
- figure 4 shows a perspective view in an enlarged scale and in partial longitudinal section of some details of the integrated heat exchange and storage unit of figure 3;
- figure 5 shows an elevational view, in an enlarged scale and in partial longitudinal section, of some details of the integrated heat exchange and storage unit of figure 3 during a step of a manufacturing method thereof;
- figure 6 shows an elevational view, in an enlarged scale and in partial longitudinal section, of an alternative embodiment of an integrated heat exchange and storage unit according to the invention.

With reference to the aforesaid figures, a water heating apparatus, in particular a wall boiler of the so called combined type according to a preferred embodiment of the present invention, is globally indicated by 1.

The boiler 1 comprises a substantially parallelepipedic casing 2, frontally provided with a control panel 3 comprising an electronic control unit known *per se* for controlling and regulating the boiler.

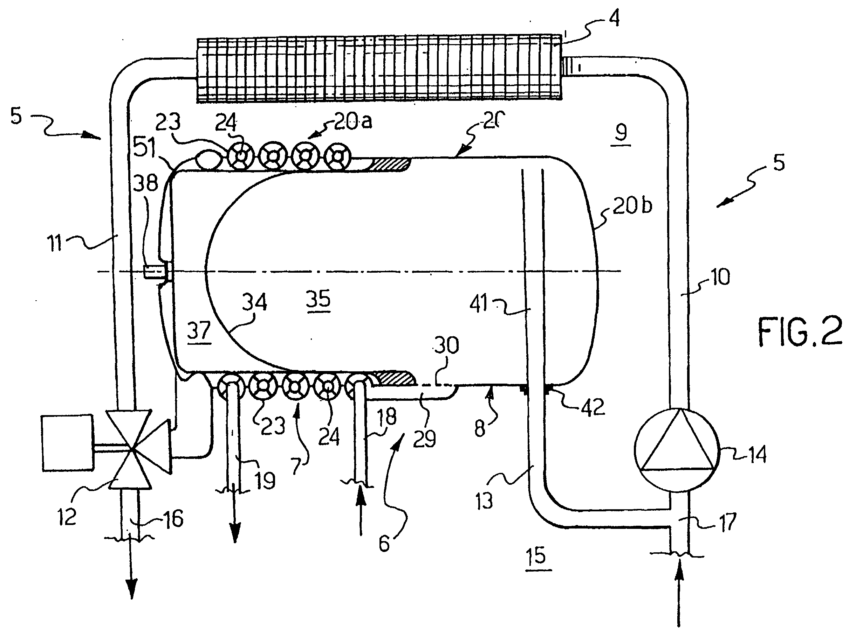

The various parts of the boiler 1, some of which are schematically indicated in the simplified hydraulic diagram of figure 2, are conventionally supported inside the casing 2.

More particularly, the boiler 1 comprises a gas-water heat exchanger 4 adapted to produce hot primary water for space heating (which will be referred to in the following with the term of: primary exchanger) in fluid communication, by means of a primary hydraulic circuit globally indicated by 5, with a plurality of radiant elements, not shown, adapted to heat the rooms of an inhabited unit, and with an integrated heat exchange and storage unit 6 according to the invention.

According to a preferred embodiment, the integrated unit 6 comprises a storage tank 8 of hot water for space heating (which will be referred to in the following with the term of: hot primary water), including a containing casing 20 and a water-water heat exchanger 7 adapted to produce hot sanitary water (which will be referred to in the following with the term of: secondary exchanger) externally associated to the tank 8.

As is illustrated in the simplified hydraulic diagram of figure 2, in the primary hydraulic circuit 5 of the boiler 1 two fluid paths are defined, closed in loop and arranged in parallel with one another, adapted to connect the primary heat exchanger 4 with the radiant elements or with the integrated heat exchange and storage unit 6, respectively.

A first one of these paths, indicated by 9 in figure 2 and provided inside the boiler 1, comprises a pair of delivery and return ducts 10, 11 to and, respectively, from the primary heat exchanger 4, a three-way valve 12, the secondary exchanger 7, the tank 8, a primary water outlet duct 13 from the tank 8 and a pump 14, preferably a variable flow rate pump, for the circulation of water in the primary hydraulic circuit 5.

In the illustrated embodiment, therefore, the ducts 10 and 11, the three-way valve 12, the secondary exchanger 7, the duct 13 and the pump 14 constitute respective means for putting the tank 8 in fluid communication with the primary heat exchanger 4 and for allowing the storage of a predetermined amount of hot primary water in the containing casing 20.

A second one of these paths, indicated by 15 in figure 2 and extending at least partly externally to the boiler 1, comprises a pair of delivery and return ducts 16, 17 to and, respectively, from the radiant elements (not shown), adapted to heat the rooms of the inhabited unit.

The aforesaid inner 9 and outer paths 15 of the primary hydraulic circuit 5 are reciprocally connected by means of a pair of pipe fittings, known per se and not shown in the figures.

In a way known per se, the circulation of the primary water in the primary hydraulic circuit 5 is promoted by the pump 14 and directed towards one or the other of the aforesaid hydraulic paths 9 and 15 by means of the three-way valve 12 as will be more evident in the following.

More particularly, the three-way valve 12 is controlled in a way known per se by an actuator incorporating a flow-detector, known per se and not shown, mounted on a duct 18 adapted to feed sanitary cold water drawn from the water mains to the secondary exchanger 7.

A duct connected to the secondary exchanger 7, which is adapted to feed hot sanitary water toward the users, is indicated by 19.

Similarly to what has been described above with reference to the ducts 16 and 17, also the aforesaid ducts 18 and 19 are provided with pipe fittings, known per se and not shown, for connection to an external circuit adapted to distribute the hot sanitary water to the various users, circuit which in its turn is provided with corresponding pipe fittings, which are also not shown, adapted to be sealingly fit thereon.

Preferably, the secondary heat exchanger 7 is of the so-called double-pipe type, and comprises a pair of coaxial respectively inner 23 and outer 24 tubular ducts, spirally wound on a portion of the containing casing 20 of the tank 8.

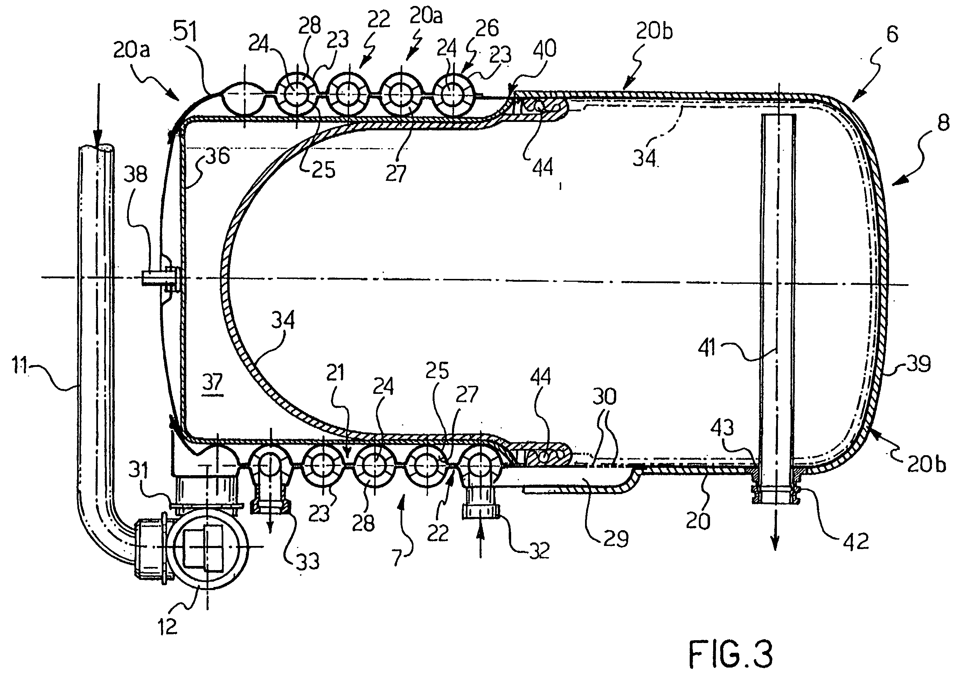

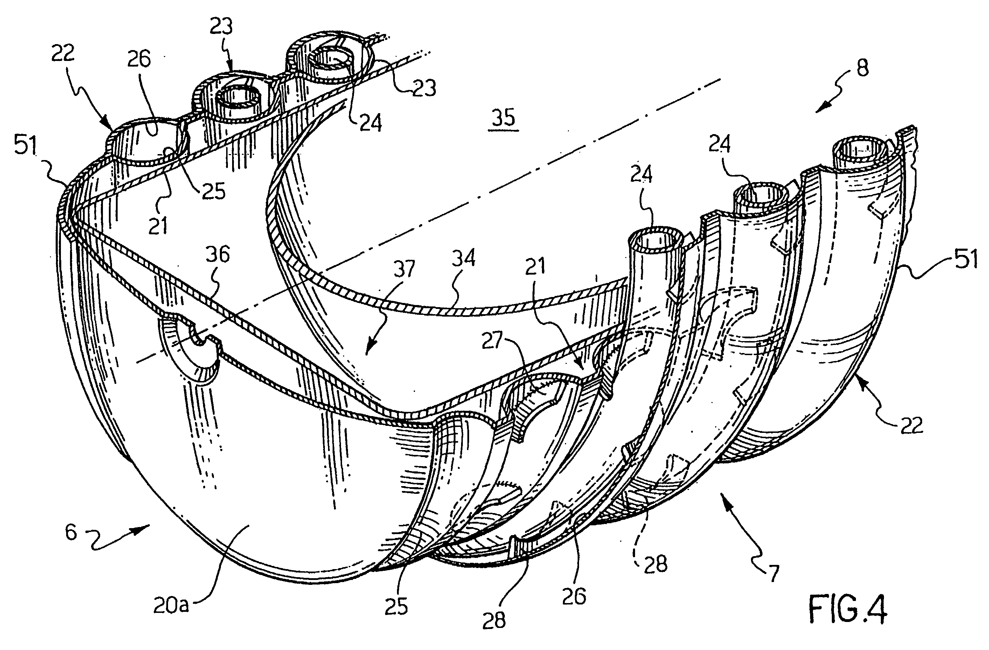

According to a preferred embodiment, and as is shown in figures 3 and 4, the secondary exchanger 7 of the integrated unit 6 is at least partly integrally formed within the containing casing 20 of the storage tank 8 of the hot primary water and, more particularly, comprises an inner wall 21 consisting of a suitably shaped portion of a first cap 20a of the containing casing 20 of the tank 8 and an outer wall 22 integrally formed within an essentially tubular element 51, coaxially associated to the cap 20a.

In this embodiment, the inner 21 and outer walls 22 of the secondary exchanger 7 are respectively provided with essentially semicircular grooves 25, 26, facing each other and extending along a substantially helicoidal path: in this way, the outer duct 23 of the secondary exchanger 7 is advantageously defined juxtaposing the aforesaid facing grooves 25, 26 formed in the inner 21 and outer walls 22 of the heat exchanger.

Preferably, and in order to support the inner duct 24 inside the outer duct 23 while ensuring at the same time an adequate coaxiality between the same, the essentially semicircular grooves 25, 26 respectively formed in the inner 21 and outer walls 22 of the heat exchanger 7, are provided with a plurality of ribs 27, 28, having a substantially saddle-like shape and pitchwise spaced from one another.

Preferably, such ribs form an angle equal to about 30° with respect to a longitudinal axis (of which is shown the trace in figure 3) of the outer duct 23 of the secondary exchanger 7.

Advantageously, the ribs 27, 28 not only constitute an effective supporting means for the inner duct 24 but also contribute to stiffen the inner 21 and outer walls 22 of the heat exchanger 7 and to further increase the turbulence of the hot primary water for space heating flowing in the outer duct 23, thus optimizing the heat exchange efficiency.

According to a preferred embodiment, the secondary exchanger 7 is in fluid communication with the tank 8 by means of a substantially straight channel 29 defined between the outer wall 22 of the heat exchanger 7 and a wall of the containing casing 20 of the tank 8, and a plurality of openings 30 formed in this wall.

In this embodiment, the channel 29 is defined between the outer wall 22 and a second cap 20b of the casing 20 whereas the openings 30 are formed in the second cap 20b at one end of the channel 29.

Preferably, the channel 29 is integrally formed within the outer wall 22 of the heat exchanger 7 by means of conventional operations of plastic deformation and has a cross section predetermined at design stage and suitable for properly reducing the velocity of the primary water leaving the heat exchanger 7 itself.

Conveniently, the channel 29 extends between an end coil of the exchanger 7, to which the same is essentially perpendicular, and a portion of the cap 20b, adjacent to the openings 30.

In order to ensure the desired fluid circulation from and to the integrated unit 6, the outer wall 22 of the secondary exchanger 7 is provided with a pipe fitting 31 for connection to the three-way valve 12 of the primary hydraulic circuit 5 of the boiler 1, as well as a pair of pipe fittings 32, 33 for feeding to and withdrawing from the secondary exchanger 7 the sanitary water to be heated, associated to the opposite ends of the inner duct 24.

In a preferred embodiment of the integrated unit 6, the storage tank 8 of the hot primary water accomplishes at the same time also the task of expansion tank: to this end, the tank is provided with suitable means adapted to allow the expansion of the stored hot primary water. Preferably, the aforesaid means comprises a membrane 34, preferably made of a suitable elastomeric material, such as for example styrene-butadiene rubber (SBR), wherein a zone 35 is defined for storing a predetermined volume of hot primary water, the temperature of which is constantly detected by a thermostat of conventional type, not shown.

The membrane 34 is associated in a way know per se to the cap 20b of the casing 20 between the openings 30 and the junction zone 40 between the caps 20a, 20b. Preferably, the membrane 34 is pivotally mounted on a supporting ring 44, fixed to the cap 20b, so as to be in condition of being placed during the installation in its working position, shown as a thick line in figure 3, from a starting position, shown as a phantom line in such figure, wherein the same lays substantially flush with the inner wall of the cap 20b.

In such embodiment, the storage tank 8 of the hot primary water preferably comprises also a substantially cylindrical cup 36, interposed between the cap 20a of the containing casing 20 and the membrane 34. Conveniently, the cap 36 is made of a suitable plastics and is substantially tangent to the outer surface of the grooves 25 formed in the inner wall 21 of the secondary heat exchanger 7.

Between the membrane 34 and the cup 36, a hollow space 37 having a variable volume is further defined, including air, possibly pressurized, or any other suitable gas, for example nitrogen, injected by means of a valve 38.

Advantageously, the cup 36 accomplishes the double task of allowing the free expansion of the membrane 34 without being in any way hindered by the grooves 25 formed in the cap 20a of the tank 8 and of contributing to the thermal insulation of the hot primary water stored in the tank 8 in combination with the membrane 34 and with the air or nitrogen present in the hollow space 37.

Preferably, the thermal insulation of the hot primary water stored in the tank 8 of the integrated unit 6 may be further improved by providing at least one layer 39 of a thermally insulating coating externally to the cap 20b of the tank 8, so as to thermally insulate the hot primary water stored but not hinder a quick cooling of the water present in the secondary exchanger 7.

In order to better take advantage of the stratification effect of the primary water stored in the zone 35 of the tank 8, the integrated unit 6 is preferably horizontally mounted within the boiler 1 and the tank 8 is internally provided with a drawing duct 41, housed in an opening 43 formed in the cap 20b and substantially extending widthwise along the casing 20. In a way know *per se*, the duct 41 is connected to the duct 13 of the hydraulic circuit 5 by means of a pipe fitting 42.

In an embodiment of the invention, the integrated unit 6 described above may be manufactured by means of a method including the following steps.

In a first step, in a way known *per se,* for example by means of drawing, a substantially cylindrical cap 20a of the containing casing 20 of the tank 8 is provided and having a diameter predetermined at a design stage, in which cap 20a the grooves 25, having a radius predetermined at design stage and equal to the radius which is desired to impart to the outer duct 23 of the secondary exchanger 7, are subsequently formed by means of plastic deformation, for example by means of hydro-forming in suitably shaped molds, or by means of roll forming.

In the preferred embodiment, shown in the drawings, the grooves 25 are preferably essentially constituted by the coils of a single essentially semicircular groove which is spirally wound with a predetermined pitch, determined at design stage according to the heat exchange capacity to be imparted to the secondary exchanger 7, along the cap 20a of the tank 8.

Preferably, the method according to the invention further comprises a step of forming the ribs 27 in the grooves 25 formed in the cap 20a, which can be carried out in a way known *per se* and by means of known equipment by hydro-forming while forming the grooves 25, or by molding when the grooves 25 are formed by roll forming.

In the same processing line and in a further step of the method, the cap 20b of the casing 20 of the tank 8 is provided having preferably a diameter substantially identical to the diameter of the cap 20a to which it is then fixed in a way known per se, for example by means of laser welding.

Preferably, in a way known per se, both the openings 30 adapted to allow the fluid communication between the secondary exchanger 7 and the inside of the tank 8, and the opening 43 adapted to house the drawing duct 41 are further formed in the cap 20b.

In a preferred embodiment, and whenever the storage tank 8 also accomplishes the task of expansion tank, the method according to the invention further comprises the step of providing in the cap 20b means adapted to allow the expansion of the hot primary water stored therein. Preferably, the aforesaid means consists of the membrane 34 wherein the hot primary water storage zone 35 is defined.

In this embodiment, the membrane 34 is preferably pivotally mounted on the supporting ring 44 in a starting position illustrated in phantom line in figure 3, wherein the same lays substantially flush with the inner wall of the cap 20b.

In this embodiment, furthermore, the method according to the invention preferably comprises the step of mounting the cup 36 in the cap 20a in such a way as to allow the subsequent free expansion of the membrane 34 without interferences of any kind by the grooves 25 formed in the cap 20a itself.

In a separate processing line, an essentially tubular element 22 is provided having a second predetermined diameter greater than the diameter of the cap 20a of the tank 8 wherein grooves 26 are formed by plastic deformation, for example by punching carried out with rubber punches, which grooves have a radius substantially identical to the radius of the grooves 25 and equal to the radius which is desired to impart to the outer duct 23 of the secondary exchanger 7.

Similarly to what has been disclosed above with reference to the grooves 25, also the grooves 26 are preferably essentially constituted by the coils of a single essentially semicircular groove which is spirally wound with a predetermined pitch, determined at design stage according to the heat exchange capacity that it is desired to impart to the secondary exchanger 7, along the element 22.

Also in this case, the method according to the invention preferably comprises the additional step of forming the ribs 28 in the grooves 26 formed in the element 22.

In a preferred embodiment and in order to facilitate the subsequent steps of assembling the integrated unit 6, the method according to the invention further comprises the step of imparting to a free end of the element 22 a shape essentially mating with that of the free end of the cap 20a of the tank 8 and on which it is adapted to abut, as will be more clear in the following description.

Preferably, furthermore, the opposite free end of the element 22 is suitably shaped, for example by means of hydro-forming in a mold, in such a way as to form the outer wall of the channel 29 which, once the heat exchanger 7 has been assembled, extends between an end duct 23 and a portion of the cap 20b adjacent to the openings 30.

In a subsequent step of the method, the duct 24 previously spirally shaped having a pitch equal to that of the grooves 25, 26 and adapted to form the inner duct of the secondary exchanger 7, is associated to the grooves 26 of the element 22 by which the duct is maintained in position.

In such a way, a grooved element 22/duct 24 assembly is formed which is then fit on the cap 20a of the tank 8 until each of the grooves 26 is juxtaposed with a respective groove 25 formed in the cap itself.

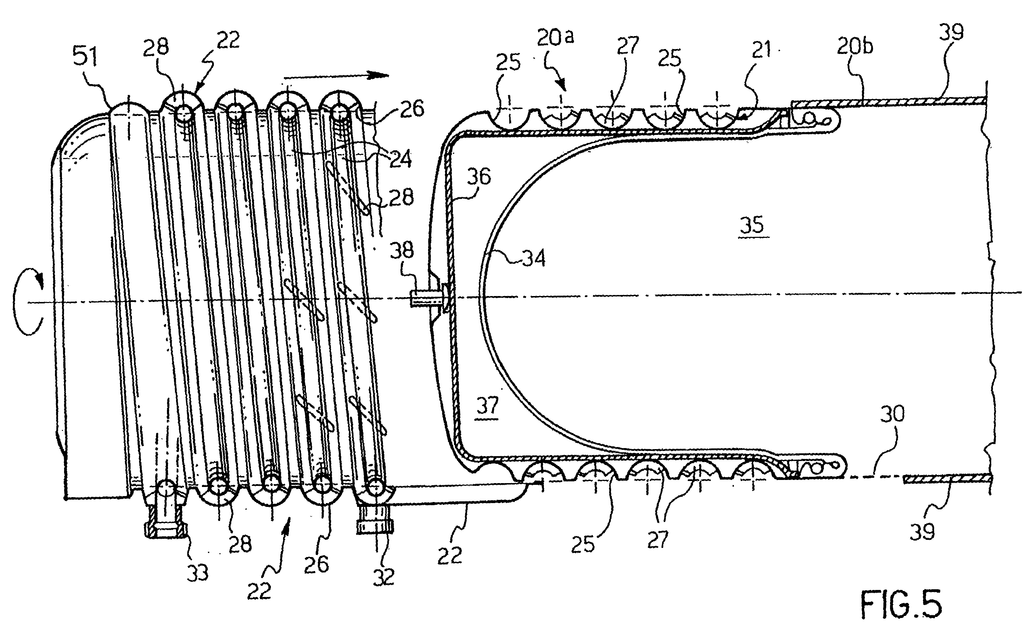

Preferably, this step is carried out by screwing, using the duct 24 as the threaded portion of a screw as schematically shown in figure 5.

In an embodiment of the method according to the invention, this last step is preceded by an optional step wherein the membrane 34, if present, is placed in its working position (illustrated with thick line in figure 3) which contacts the cup 36, upon rotation around the supporting ring 44.

Once the grooved element 22/duct 24 assembly has been fit onto the cap 20a, such assembly is then associated to the same cap 20a so as to complete the assembling of the secondary exchanger 7 which is therefore incorporated in the structure of the integrated unit 6.

Preferably, the grooved element 22/duct 24 assembly is associated to the cap 20a by laser welding at the ends of the element 22 which forms - once the assembling has been completed - the outer wall of the secondary exchanger 7.

Advantageously, it is not necessary to carry out any side welding between the outer ducts 23 of the secondary exchanger 7 for ensuring a seal connection between each other, as both the grooved element 22/duct 24 assembly and the cap 20a form an equal number of structurally stiff elements adapted to withstand the pressure of the primary water flowing in operation within the same outer ducts 23.

In any case, if side leakages between the ducts 23 occurred, these would essentially be negligible and in any case such not to remarkably affect the performances of the secondary exchanger 7.

Advantageously, furthermore, the presence of the ribs 27, 28 contributes to properly center the inner duct 24 within the outer duct 23, ensuring their coaxiality and, along therewith, a correct operation of the secondary exchanger 7 from the fluid-dynamic point of view.

In a preferred embodiment, the method according to the invention may further comprise the step of heating the grooved element 22/duct 24 assembly before fitting the same onto the cap 20a of the tank 8.

By means of this hot assembling, it is advantageously possible to ensure the desired side seal between the outer ducts 23 of the secondary exchanger 7 without the need to carry out expensive precision working nor welding, as the shrinking step of the grooved element 22/duct 24 assembly which follows its cooling allows a stable fixing of such assembly onto the cap 20a.

In a preferred embodiment, before associating the caps 20a, 20b with one another and once the secondary exchanger 7 is integrated within the unit 6, the method of the invention may comprise additional steps by means of which:
- the pipe fitting 31 is associated to the element 22, and therefore to the outer wall of the secondary exchanger 7, for connection to the three-way valve 12;
- the pipe fittings 32, 33 are associated to the outer duct 23 of the secondary exchanger 7, for feeding and withdrawing therefrom the sanitary water;
- the duct 41 is inserted in the tank 8 through the opening 43;
- the pipe fitting 42 is associated to the duct 41 for connection to the duct 13 of the primary hydraulic circuit 5.

Finally, the method according to the invention further preferably comprises the step of providing the thermal insulating coating layer 39 on the outer surface of the cap 20b of the casing 20 of the tank 8, so as to increase the characteristics of thermal insulation of the integrated unit 6.

According to an advantageous feature of the method according to the invention, the working steps disclosed above may be easily carried out exploiting the well established and reliable manufacturing technology of the expansion tanks by introducing minimum modifications to full advantage of the reliability and reproducibility of the manufacturing process of the integrated unit 6.

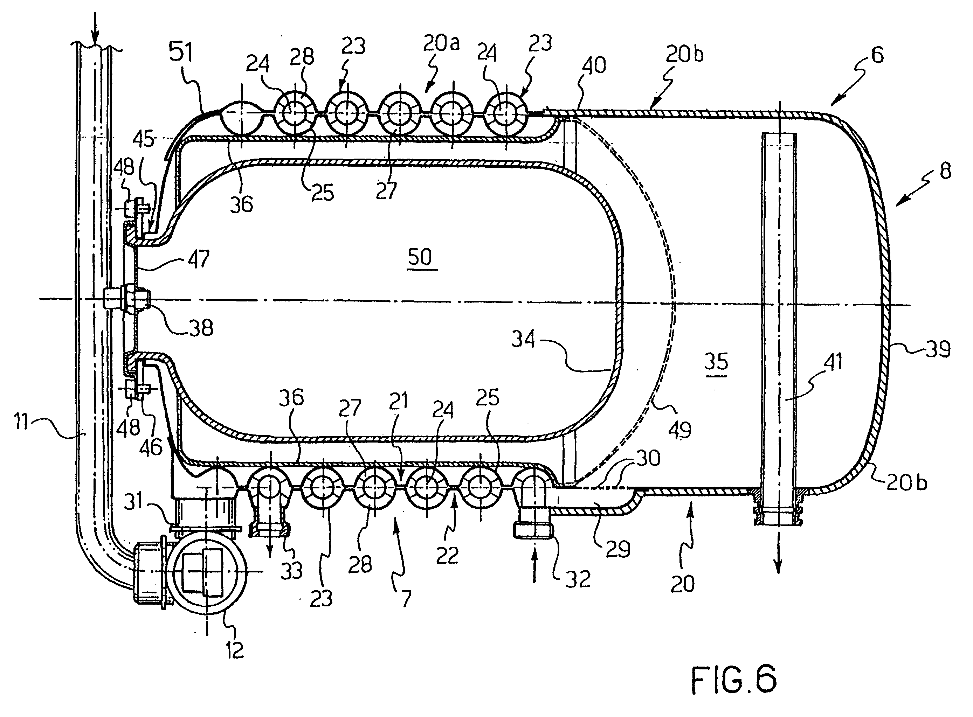

A further embodiment of the integrated heat exchange and storage unit 6 according to the present invention is shown in figure 6.

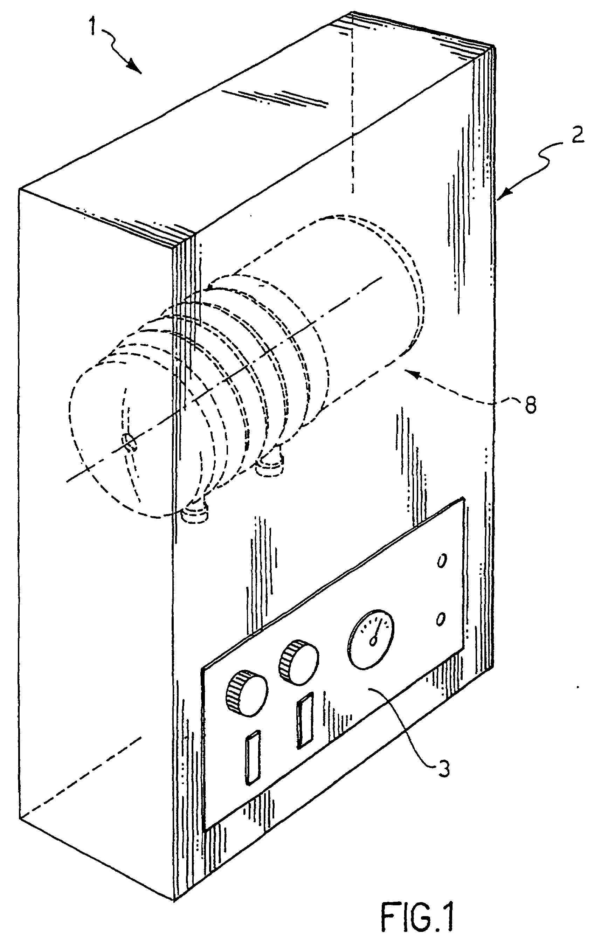

In the following description and in such figure, the elements of the integrated unit 6 which are structurally or functionally equivalent to those previously illustrated with reference to figures 1-5 will be indicated by the same reference numbers and will not be described any more.

In the embodiment illustrated in figure 6, the membrane 34 is of the so called bag type and is removably mounted in the storage tank 8 of the hot primary water which in this case as well simultaneously accomplishes the task of expansion tank.

To this aim, the cap 20a of the containing casing 20 is provided with a suitably shaped opening 45, in which the edge of the free end of the membrane 34 is fit, which is maintained in position between a flange 46 fixed to the cap 20a coaxially with the opening 45 and a counterflange 47. The latter is blocked against the flange 46 by means of a plurality of conventional bolts 48.

Advantageously, it is possible in this way to replace the membrane 34 in case of an early deterioration with a substantial simplification of the maintenance operations.

Advantageously, furthermore, the ways of fixing the membrane 34 to the cap 20a allow to move at will the junction zone 40 between the two caps 20a and 20b the positioning of which is no longer determined by the position of the supporting means of the membrane, as provided in the previous embodiment.

In this way, it is possible both to vary at will the size of the secondary exchanger 7 (just by way of example, the secondary exchanger 7 of figure 6 has one coil more than that of figure 3), and to form - if desired - the openings 30 in the cap 20a consequently reducing the length of the duct 29.

Advantageously, the secondary exchanger 7, the duct 29 and the openings 30 may be formed in this case only along the cap 20a, thus avoiding to superimpose the welded joints required to associate the outer wall 22 and the casing 20 and the caps 20a and 20b (zone 40) with one another.

In this embodiment, the zone 35 for storing the hot primary water is externally defined with respect to the membrane 34; in particular, the zone 35 is defined in the hollow space between the membrane 34 and the cup 36 and within the second cap 20b of the casing 20.

As a result, the air or nitrogen required for the operation of the membrane 34 is now housed in a zone 50 having variable volume defined within the same membrane, whereas the valve 38 for feeding such gases is now mounted in the counterflange 47.

Conveniently, the cup 36 has in this case a cross section suitable to allow the passage of the free edge of the membrane 34 and may be obtained by suitably shaping a tubular portion of proper diameter, with an advantageous reduction of the production costs.

In this embodiment, furthermore, it is preferable to fix within the casing 20 and at a predetermined distance from the membrane 34, a perforated cap 49 having the task of being a limiting element for the expansion of the membrane 34. In this way, it is advantageously possible to avoid that in case of leakages from the plant for space heating, the bag membrane 34 excessively expands reducing the volume of hot water stored in the tank 8 below the minimum value required for ensuring the desired prompt delivery of hot sanitary water.

The manufacturing method of this embodiment of the integrated unit 6 is similar to that previously described, except for the additional steps of forming in a way known *per se,* for example by means of drawing and drilling, the opening 45 of the cap 20a, of providing the means adapted to fix the bag membrane 34 to the cap 20a and of fixing the perforated cap 49 within the casing 20, step which is preferably carried out in conjunction with the step of associating the caps 20a and 20b with one another.

The operation of the boiler 1 and of the integrated unit 6 incorporated therein is as follows.

In the absence of sanitary water demand, and when working in space heating mode, the pump 14 promotes a fluid circulation from the duct 17 to the delivery duct 10 to the primary exchanger 4, whereas the three-way valve 12 closes the inlet duct 23 of the secondary exchanger 7 and deviates the primary water towards the duct 16 for feeding the radiant elements.

According to this operating mode, the hot primary water exclusively circulates in the fluid path 15 so as to transfer to the radiant elements a portion of the heat absorbed from the primary heat exchanger 4.

In absence of sanitary water drawing, the hot primary water temperature stored in the tank 8 of the integrated unit 6 is maintained at a constant value, deviating through the three-way valve 12 the primary water towards the storage zone 35, upon passing through the secondary exchanger 7.

Such operation is controlled by a thermostat, conventional per se and not shown, adapted to control the temperature of the water scored in the tank 8, thermostat which acts each time such temperature decreases and controls the boiler burner so as to deliver the highest thermal power toward the primary heat exchanger 4 and through the three-way valve 12 interrupts the fluid circulation in the path 15 and switches the primary water circulation from duct 11 towards the secondary exchanger 7.

In this way, the primary water only circulates in the flow path 9, by-passing the radiant elements 6.

Since the tank 8 and the secondary exchanger 7 are arranged in series with one another in the integrated unit 6, as soon as hot water is drawn for sanitary use, a similar circulation of hot primary water occurs in the flow path 9 thanks to the intervention of the actuator with incorporated flow-detector associated to the duct 18.

In this way, the hot primary water stored in the tank 8 is directed to the primary exchanger 4, where the same is further immediately heated to the maximum working temperature and then directed to the secondary exchanger 7 wherein the same transfers its heat content to the cold water drawn from the water mains.

Advantageously, the heat exchange efficiency between the hot primary water and the sanitary water to be heated is increased both by the possibility of flowing the two liquids in countercurrent, and by the high turbulence and velocity which is possible to impart to such liquids. In particular, velocity and turbulence of the hot primary water are remarkably increased both by the relatively narrow flowing section defined between the ducts 23 and 24 of the secondary exchanger 7 and by the ribs 27 and 28 extending in such flowing section.

Thanks to the reduced thermal inertia of the secondary exchanger 7, and to its high heat exchange efficiency, the time needed for delivering sanitary water at the desired temperature reduces to few seconds, thus allowing a prompt delivery of hot water from the boiler 1.

Advantageously, the specific horizontal arrangement of the integrated unit 6 allows to fully exploit the stratification effect of the hot primary water stored in the storage zone 35 of the tank 3, effect which is more than enough for compensating the thermal inertia of the two primary and secondary exchanger 4 and 7 and for allowing the prompt delivery of hot sanitary water also in the start-up transient, wherein the primary and secondary exchanger 4 and 7 achieve their operating thermal conditions.

In this working condition, the primary water, after having transferred part of its heat content to the sanitary water, is again forwarded to the storage zone 35 of the tank 8.

Advantageously, the reintegration of the stored primary water is carried out in the lower zone of the tank 8 by means of the channel 29 and of the openings 30 which, being provided with an adequately reduced cross section, allow to reduce the velocity of the primary water coming from the secondary exchanger 7 and contribute to keep the aforesaid stratification effect.

Advantageously, furthermore, by adjusting the flow rate delivered by the pump 14, it is possible to draw from the tank 8 the minimum amount of hot primary water required for achieving the desired temperature of the sanitary water.

When the withdrawal of sanitary water is finished and according to the temperature detected by the thermostat associated to the tank 8, the boiler returns to the previous operating conditions or provides for the storage of new hot primary water according to the above described mode.

Advantageously, furthermore, when the withdrawal of sanitary water is finished, the water present in the secondary exchanger 7 can rapidly cool down thanks to the large exposure toward the outside of its outer wall 22 and thanks to the effective insulation of its inner wall 21 with respect to the hot water stored in the zone 35.

In the embodiment illustrated in figures 3-5, such insulation is accomplished by the membrane 34, by the cup 36, by the air (or nitrogen) retained in the hollow space 37 defined between the membrane 34 and the cup 36 and by the air retained in the hollow space defined between the cup 36 and the grooves 25.

In the embodiment illustrated in figure 6, instead, such insulation is accomplished by the cup 36 which thermally insulates the water retained in the hollow space defined between the same and the grooves 25, reducing the heat exchange with the remaining part of water stored in the zone 35.

In this second embodiment, it is therefore advisable to adequately reduce the temperature of the water stored in the zone 35 of the tank 8 for limiting at minimum the formation of limestone inside the secondary exchanger 7, achieving however at the same time the advantage of a further reduction of the time required for delivering hot sanitary water.

It is clear that in all the above described operating modes, the tank 8, besides accomplishing the important task of heat accumulator providing hot water ready to be delivered to the secondary exchanger 7, also acts as an expansion tank, compensating all the heat expansions-shrinks of the primary water and ensuring a proper operation of the boiler 1.

Clearly, in all the aforesaid working modes, the burner which heats the primary exchanger 4 and/or the pump 14 are started up - in a way known *per se* - if the same are in stand-by.

According to what has been disclosed and illustrated above the various advantages achieved by the present finding are immediately clear. Among them, it is therefore possible to mention the following:
- extreme compactness of the integrated heat exchange and storage and optionally expansion unit;
- absence of connecting pipes between the secondary exchanger and the storage tank;
- sharp reduction of material consumption required for manufacturing the integrated unit;
- optimization of the performances of the secondary exchanger;
- optimum exploitation of the water stratification in the storage tank;
- minimum modifications to the manufacturing technology used for the realization of the storage tank/expansion tank;
- quick fit of the three-way valve directly on the proper pipe fitting provided within the secondary exchanger;
- effective thermal insulation of the hot primary water stored in the storage tank;
- rapid cooling of the secondary exchanger with a reduction of the phenomenon of the limestone deposits due to the stagnation of water at high temperature for long periods of time.

Advantageously, finally, whenever the tank 8 accomplishes the double task of storage and expansion, the further relevant advantage is achieved of a seasonal "self-adjustment" of the storage capacity of primary water in the zone 35 defined within the tank 3.

In winter, when the primary water achieves its maximum temperature and therefore also the maximum degree of volumetric expansion, the storage capacity within the zone 35 is at its maximum level, thus allowing to widely compensate the higher thermal inertia of the primary and secondary exchangers 4 and 7 and the higher heat losses occurring along the various ducts.

Conversely, in summer, when the boiler 1 just works to deliver hot sanitary water and the primary water achieves the minimum degree of volumetric expansion, the storage capacity within the zone 35 is at its lowest level, in perfect alignment with the lower thermal inertia of the primary and secondary exchangers 4 and 7 and the lower heat losses occurring along the various ducts.

## Claims

1. Integrated heat exchange and storage unit (6) for a water heating apparatus (1) comprising:
- a storage tank (8) of hot primary water for space heating including a containing casing (20) wherein a storage zone (35) for a predetermined amount of said hot primary water is defined;
- a water-water heat exchanger (7) for producing hot sanitary water externally positioned with respect to said storage zone (35) of the hot primary water,
means (29, 30) being provided for putting said water-water heat exchanger (7) in fluid communication with the tank (8),
whereby said water-water heat exchanger (7) comprises an inner wall (21) integrally formed in a first cap (20a) of the containing casing (20) of the tank (8) and an outer wall (22) integrally formed in a mating element (51) having a shape substantially mating with the shape of the first cap (20a) and coaxially fixed thereto.

2. Integrated unit (6) according to claim 1, whereby said mating element (51) is essentially tubular.

3. Integrated unit (6) according to claim 1, whereby the water-water heat exchanger (7) comprises a pair of inner and, respectively, outer coaxial tubular ducts (23, 24), spirally wound on the containing casing (20) of the storage tank (8) of the hot primary water.

4. Integrated unit (6) according to claim 1, whereby the inner (21) and outer (22) walls of the water-water heat exchanger (7) are provided with respective essentially semicircular grooves (25, 26), facing each other and formed along a substantially spiral path, said facing grooves (25, 26) defining the outer tubular ducts (23) of the water-water heat exchanger (7).

5. Integrated unit (6) according to claim 4, whereby the grooves (25, 26) formed in the inner (21) and outer (22) walls of the water-water heat exchanger (7) are provided with a plurality of ribs (27, 28), having a substantially saddle-like shape and pitchwise spaced from one another.

6. Integrated unit (6) according to claim 5, whereby the ribs (27, 28) form an angle comprised between 20° and 45° with respect to a longitudinal axis of the outer duct (23) of the water-water heat exchanger (7).

7. Integrated unit (6) according to claim 5, whereby the inner tubular duct (24) of the water-water heat exchanger (7) is supported by said ribs (27, 28).

8. Integrated unit (6)according to claim 1, whereby the means (29, 30) for putting the water-water heat exchanger (7) in fluid communication with the storage tank (8) comprises:
i) a channel (29) defined between the outer wall (22) of the heat exchanger (7) and a wall of the containing casing (20) of the tank (8), and
ii) a plurality of openings (30) formed in the wall of the containing casing (20) at one end of said channel (29).

9. Integrated unit (6) according to claim 1, whereby the storage tank (8) is provided with means adapted to allow the expansion of the hot primary water stored within said containing casing (20).

10. Integrated unit (6) according to claim 9, whereby said means comprises a membrane (34) wherein said storage zone (35) of the hot primary water is defined.

11. Integrated unit (6) according to claim 9, whereby said means comprises a bag-type membrane (34) removably associated to the containing casing (20) of the tank (8), said storage zone (35) of the hot primary water being defined between the bag-type membrane (34) and said containing casing (20).

12. Integrated unit (6) according to claim 11, whereby it further comprises a perforated cap (49) supported in said containing casing (20) of the tank (8) at a predetermined distance from said bag-type membrane (34).

13. Integrated unit (6) according to anyone of claims 10-12, whereby the storage tank (8) of the hot primary water for space heating further comprises a substantially cylindrical cup (36) interposed between the containing casing (20) of the tank (8) and the membrane (34).

14. Integrated unit (6) according to claim 1, whereby the containing casing (20) of the tank (8) is at least partly externally provided with at least one layer (39) of a thermally insulating coating.

15. Method for manufacturing an integrated heat exchange and storage unit (6) for a water heating apparatus (1) comprising a storage tank (8) wherein a storage zone (35) of a predetermined amount of hot primary water for space heating is defined and a water-water heat exchanger (7) for producing hot sanitary water at least partly integrally formed within a containing casing (20) of the tank (8), including the steps of:
- providing a first substantially cylindrical cap (20a) of the containing casing (20) of the storage tank (8), said cap (20a) having a first predetermined diameter;
- forming in the first cap (20a) a plurality of first essentially semicircular grooves (25) having a predetermined radius so as to form a first wall (21) of said water-water heat exchanger;
- providing a second substantially cylindrical cap (20b) of the containing casing (20) of the storage tank (8), said second cap (20b) having a diameter substantially identical to the diameter of the first cap (20a);
- fixing together said first (20a) and second (20b) caps so as to form said containing casing;
- providing an essentially tubular element (51) having a second predetermined diameter greater than the diameter of the first cap (20a) of the storage tank (8);
- forming a plurality of second essentially semicircular grooves (26) in said essentially tubular element (51), said second grooves (26) having a radius substantially identical to the radius of the first grooves (25);
- fixing to said second grooves (26) a tubular duct having a radius smaller than the radius of said first (25) and second (26) grooves;
- fitting said essentially tubular element (51) onto the first cap (20a) of the storage tank (8) until each one of said second grooves (26) is juxtaposed to a corresponding first groove (25) formed in the first cap (20a) so as to define a second wall (22) of said water-water heat exchanger (7);
- fixing the essentially tubular element (51) to the first cap (20a) of the storage tank (8) so as to define a water-water heat exchanger (7) at least partly integrally formed within the containing casing (20) of the storage tank (8).

16. Method according to claim 15, wherein said first (25) and second (26) grooves are essentially constituted by the coils of a single essentially semicircular groove which is spirally wound with a predetermined pitch.

17. Method according to claim 15, further comprising the step of forming a plurality of ribs (27, 28) having a substantially saddle-like shape and pitchwise spaced from one another, in the grooves (25, 26) formed in said first cap (20a) and in said essentially tubular element (51) of the water-water heat exchanger (7).

18. Method according to claim 16, wherein said essentially tubular element (51) is fit onto the first cap (20a) of the storage tank (8) by screwing.

19. Method according to claim 16, further comprising the step of heating said essentially tubular element (51) before fitting said element (51) onto the first cap (20a) of the storage tank (8).

20. Method according to claim 15, further comprising the step of providing in the storage tank (8) means adapted to allow the expansion of the hot primary water stored in said storage zone (35) of the containing casing (20).

21. Method according to claim 15, further comprising the step of providing a thermal insulating coating layer (39) on the outer surface of the second cap (20b) of the containing casing (20) of the storage tank (8).

22. Water heating apparatus (1) comprising a gas-water heat exchanger (4) for producing hot primary water for space heating in heat exchange relationship with a second water-water heat exchanger (7) for producing hot sanitary water by means of a primary hydraulic circuit (5), **characterized in that** it comprises, in said primary hydraulic circuit (5), an integrated heat exchange and storage unit (6) according to anyone of claims 1-14.

## Patentansprüche

1. Integrierte Wärmetauscher- und Speichereinheit (6) für eine Wasserheizungsvorrichtung (1), mit:
- einem Speicherbehälter (8) für heißes Primärwasser zur Raumbeheizung, der ein umschließendes Gehäuse (20) aufweist, in dem eine Speicherzone (35) für eine vorbestimmte Menge des heißen Primärwassers festgelegt ist;
- einem Wasser-Wasser-Wärmetauscher (7) zur Erzeugung von heißem Sanitärwasser, der bezüglich der Speicherzone (35) des heißen Primärwassers außerhalb angeordnet ist,
- Mitteln (29, 30), die bereitgestellt sind, um den Wasser-Wasser-Wärmetauscher (7) in Fluidverbindung mit dem Behälter (8) zu setzen, bei der Wasser-Wasser-Wärmetauscher (7) eine integriert in einer ersten Kappe (20a) des umschließenden Gehäuses (20) des Behälters (8) ausgebildete, innere Wand (21) und eine äußere Wand (22) aufweist, die integriert in einem zusammenpassenden Element (51) ausgebildet ist, das eine im wesentlichen zur Form der ersten Kappe (20a) passende Form aufweist und koaxial dazu befestigt ist.

2. Integrierte Einheit (6) nach Anspruch 1, bei der das zusammenpassende Element (51) im wesentlichen rohrförmig ist.

3. Integrierte Einheit (6) nach Anspruch 1, bei der der Wasser-Wasser-Wärmetauscher (7) ein Paar innerer bzw. äußerer koaxialer rohrförmiger Leitungen (23, 24) umfasst, die spiralförmig auf umschließende Gehäuse (20) des Speicherbehälters (8) des heißen Primärwassers gewickelt sind.

4. Integrierte Einheit (6) nach Anspruch 1, bei der die innere (21) und äußere (22) Wand des Wasser-Wasser-Wärmetauschers (7) mit jeweiligen, im wesentlichen halbkreisförmigen Nuten (25, 26) versehen sind, die einander zugewandt und entlang eines im wesentlichen spiralförmigen Pfades ausgebildet sind, wobei die einander zugewandten Nuten (25, 26) die äußeren rohrförmigen Leitungen (23) des Wasser-Wasser-Wärmetauschers (7) begrenzen.

5. Integrierte Einheit (6) nach Anspruch 4, bei der die in der inneren (21) und äußeren (22) Wand des Wasser-Wasser-Wärmetauschers (7) ausgebildeten Nuten (25, 26) mit einer Mehrzahl von Rippen (27, 28) versehen sind, die eine im wesentlichen sattelartige Form aufweisen und mit einer Teilung voneinander beabstandet sind.

6. Integrierte Einheit (6) nach Anspruch 5, bei der die Rippen (27, 28) einen Winkel von zwischen 20° und 45° bezüglich einer Längsachse der äußeren Leitung (23) des Wasser-Wasser-Wärmetauschers (7) bilden.

7. Integrierte Einheit (6) nach Anspruch 5, bei der die innere rohrförmige Leitung (24) des Wasser-Wasser-Wärmetauschers (7) von den Rippen (27, 28) abgestützt ist.

8. Integrierte Einheit (6) nach Anspruch 1, bei der die Mittel (29, 30) zum Setzen des Wasser-Wasser-Wärmetauscher (7) in Fluidverbindung mit dem Speicherbehälter (8) umfassen:
i) einen zwischen der äußeren Wand (22) des Wärmetauschers (7) und einer Wand des umschließenden Gehäuses (20) des Behälters (8) festgelegten Kanal (29), und
ii) eine Mehrzahl von in der Wand des umschließenden Gehäuses (20) an einem Ende des Kanals (29) ausgebildeten Öffnungen (30).

9. Integrierte Einheit (6) nach Anspruch 1, bei der der Speicherbehälter (8) mit einer Einrichtung versehen ist, die die Ausdehnung des in dem umschließenden Gehäuse (20) gespeicherten, heißen Primärwassers zu erlauben vermag.

10. Integrierte Einheit (6) nach Anspruch 9, bei der die Einrichtung eine Membran (34) umfasst, in der die Speicherzone (35) des heißen Primärwassers begrenzt ist.

11. Integrierte Einheit (6) nach Anspruch 9, bei der die Einrichtung eine beutelartige Membran (34) umfasst, die lösbar dem Einschließungsgehäuse (20) des Behälters (8) zugeordnet ist, wobei die Speicherzone (35) des heißen Primärwassers zwischen der beutelartigen Membran (34) und dem Einschließungsgehäuse (20) begrenzt ist.

12. Integrierte Einheit (6) nach Anspruch 11, die ferner eine perforierte Kappe (49) aufweist, die in dem umschließenden Gehäuse (20) des Behälters (8) in einem vorbestimmten Abstand von der beutelartigen Membran (34) abgestützt ist.

13. Integrierte Einheit (6) nach einem der Ansprüche 10 bis 12, bei der der Speicherbehälter (8) des heißen Primärwassers zur Raumbeheizung ferner eine im wesentlichen zylindrische Schale (36) aufweist, die zwischen dem umschließenden Gehäuse (20) des Behälters (8) und der Membran (34) angeordnet ist.

14. Integrierte Einheit (6) nach Anspruch 1 bei der das umschließende Gehäuse (20) des Behälters (8) zumindest teilweise außen mit wenigstens einer Schicht (39) aus einer thermisch isolierenden Beschichtung versehen ist.

15. Verfahren zur Herstellung einer integrierten Wärmetauscher- und Speichereinheit (6) für eine Wasserheizungsvorrichtung (1) mit einem Speicherbehälter (8), in dem eine Speicherzone (35) einer vorbestimmten Menge heißen Primärwassers zur Raumbeheizung festgelegt ist und einem Wasser-Wasser-Wärmetauscher (7) zur Erzeugung heißen Sanitärwassers, der zumindest teilweise integriert innerhalb eines umschließenden Gehäuses (20) des Behälters (8) ausgebildet ist, mit den Schritten:
- Bereitstellen einer ersten, im wesentlichen zylindrischen Kappe (20a) des umschließenden Gehäuses (20) des Speicherbehälters (8), wobei die Kappe (20a) einen ersten vorbestimmten Durchmesser aufweist;
- Ausbilden einer Mehrzahl von ersten, im wesentlichen halbkreisförmigen Nuten (25) mit einem vorbestimmten Radius in der ersten Kappe (20a), um eine erste Wand (21) des Wasser-Wasser-Wärmetauschers zu bilden;
- Bereitstellen einer zweiten, im wesentlichen zylindrischen Kappe (20b) des umschließenden Gehäuses (20) des Speicherbehälters (8), wobei die zweite Kappe (20b) einen im wesentlichen mit dem Durchmesser der ersten Kappe (20a) identischen Durchmesser aufweist;
- Befestigen der ersten (20a) und zweiten (20b) Kappe aneinander, um das umschließende Gehäuse zu bilden;
- Bereitstellen eines im wesentlichen rohrförmigen Elements (51) mit einem zweiten vorbestimmten Durchmesser, der größer ist als der Durchmesser der ersten Kappe (20a) des Speicherbehälters (8);
- Ausbilden einer Mehrzahl von zweiten im wesentlichen halbkreisförmigen Nuten (26) in dem im wesentlichen rohrförmigen Element (51), wobei die zweiten Nuten (26) einen im wesentlichen mit dem Radius der ersten Nuten (25) identischen Radius aufweisen;
- Befestigen einer rohrförmigen Leitung mit einem Radius kleiner als der Radius der ersten (25) und zweiten (26) Nuten an den zweiten Nuten (26);
- Anbringen des im wesentlichen rohrförmigen Elements (51) auf der ersten Kappe (20a) des Speicherbehälters (8), bis jede der zweiten Nuten (26) über einer entsprechende, in der ersten Kappe (20a) ausgebildeten, ersten Nut (25) liegt, um eine zweite Wand (22) des Wasser-Wasser-Wärmetauschers (7) festzulegen;
- Befestigen des im wesentlichen rohrförmigen Elements (51) an der ersten Kappe (20a) des Speicherbehälters (8), um einen zumindest teilweise integriert innerhalb des umschließenden Gehäuses (20) des Speicherbehälters (8) gebildeten Wasser-Wasser-Wärmetauscher (7) festzulegen.

16. Verfahren nach Anspruch 15, bei dem die ersten (25) und zweiten (26) Nuten im wesentlichen durch die Windungen einer einzigen, im wesentlichen halbkreisförmigen Nut gebildet werden, die spiralförmig mit einer vorbestimmten Teilung gewunden ist.

17. Verfahren nach Anspruch 15, ferner umfassend den Schritt des Ausbildens einer Mehrzahl von Rippen (27, 28) mit einer im wesentlichen sattelartigen Form und einem Teilungsabstand voneinander in den Nuten (25, 26), die in der ersten Kappe (20a) und in dem im wesentlichen rohrförmigen Element (51) des Wasser-Wasser-Wärmetauschers (7) ausgebildet sind.

18. Verfahren nach Anspruch 16, bei dem das im wesentlichen rohrförmige Element (51) durch Schrauben auf die erste Kappe (20a) des Speicherbehälters (8) aufgebracht wird.

19. Verfahren nach Anspruch 16, ferner umfassend den Schritt des Aufheizens des im wesentlichen rohrförmigen Elements (51) vor dem Aufbringen des Elements (51) auf die erste Kappe (20a) des Speicherbehälters (8).

20. Verfahren nach Anspruch 15, ferner umfassend den Schritt des Bereitstellens einer Einrichtung im Speicherbehälter (8), die die Ausdehnung des heißen, in der Speicherzone (35) des umschließenden Gehäuses (20) gespeicherten Primärwassers zu erlauben vermag.

21. Verfahren nach Anspruch 15, ferner umfassend den Schritt des Bereitstellens einer thermisch isolierenden Beschichtungsschicht (39) auf der Außenfläche der zweiten Kappe (20b) des umschließenden Gehäuses (20) des Speicherbehälters (8).

22. Wasserheizungsvorrichtung (1) mit einem Gas-Wasser-Wärmetauscher (4) zum Erzeugen heißen Primärwassers zur Raumbeheizung in wärmeaustauschender Beziehung zu einem zweiten Wasser-Wasser-Wärmetauscher (7) zum Erzeugen heißen Sanitärwassers mittels eines hydraulischen Primärkreislaufs (5), **dadurch gekennzeichnet, dass** sie in dem hydraulischen Primärkreislauf (5) eine integrierte Wärmetauscher- und Speichereinheit (6) nach einem der Ansprüche 1 bis 14 umfasst.

## Revendications

1. Ensemble intégré d'échangeur et d'accumulateur de chaleur (6) pour un chauffe-eau (1) comprenant :
- un accumulateur (8) d'eau chaude destinée au chauffage de locaux comprenant une enveloppe (20) dans laquelle est définie une zone d'accumulation (35) recevant une quantité prédéterminée de ladite eau chaude de chauffage ;
- un échangeur eau-eau (7) pour la production d'eau chaude destinée à des appareils sanitaires et positionné extérieurement par rapport à ladite zone d'accumulation (35) de ladite eau chaude de chauffage,
des moyens (29, 30) étant fournis pour mettre l'échangeur eau-eau (7) en communication fluidique avec l'accumulateur (8),
dans lequel ledit échangeur eau-eau (7) comprend une paroi interne (21) qui fait partie intégrante d'un premier chapeau (20a) de l'enveloppe (20) de l'accumulateur (8) et une paroi externe (22) qui fait partie intégrante d'un élément apparié (51) ayant essentiellement une forme lui permettant d'être apparié au premier chapeau (20a) et fixé coaxialement à ce dernier.

2. Ensemble intégré (6) selon la revendication 1, dans lequel ledit élément apparié (51) est essentiellement de forme tubulaire.

3. Ensemble intégré (6) selon la revendication 1, dans lequel l'échangeu eau-eau (7) comprend une paire de conduits tubulaires coaxiaux respectivement intérieur et extérieur (23, 24) enroulés en spirale autour de l'enveloppe (20) de l'accumulateur (8) d'eau chaude de chauffage.

4. Ensemble intégré (6) selon la revendication 1, dans lequel les parois interne (21) et externe (22) de l'échangeur eau-eau (7) sont pourvues de gorges essentiellement semi-circulaires (25, 26) opposées et formées selon un chemin essentiellement en spirale, lesdites gorges opposées (25, 26) définissant les conduits tubulaires extérieurs (23) de l'échangeu eau-eau (7).

5. Ensemble intégré (6) selon la revendication 4, dans lequel les gorges (25, 26) formées sur les parois interne (21) et externe (22) de l'échangeu eau-eau (7) sont pourvues d'une pluralité de nervures (27, 28) essentiellement en forme de selle et disposées selon un espacement unique.

6. Ensemble intégré (6) selon la revendication 5, dans lequel les nervures (27, 28) forment un angle situé entre 20° et 45° avec l'axe longitudinal du conduit extérieur (23) de l'échangeur eau-eau (7).

7. Ensemble intégré (6) selon la revendication 5, dans lequel le conduit tubulaire intérieur (24) de l'échangeur eau-eau (7) est supporté par lesdites nervures (27, 28).

8. Ensemble intégré (6) selon la revendication 1, dans lequel les moyens (29, 30) de mise en communication fluidique de l'échangeur eau-eau (7) avec l'accumulateur (8) comprend :
i) un passage (29) défini entre la paroi externe (22) de l'échangeur eau-eau (7) et une paroi de l'enveloppe (20) de l'accumulateur (8), et
ii) une pluralité d'ouvertures (30) formées sur la paroi de l'enveloppe (20) à une extrémité dudit passage (29).

9. Ensemble intégré (6) selon la revendication 1, dans lequel l'accumulateur (8) est pourvu de moyens adaptés pour permettre l'expansion de l'eau chaude de chauffage stockée à l'intérieure de ladite enveloppe (20).

10. Ensemble intégré (6) selon la revendication 9, dans lequel lesdits moyens comprennent une membrane (34) à l'intérieure de laquelle ladite zone d'accumulation (35) de l'eau chaude de chauffage est définie.

11. Ensemble intégré (6) selon la revendication 9, dans lequel ledit moyen comprend une membrane en forme de sac (34) associée de manière amovible à l'enveloppe (20) de l'accumulateur (8), ladite zone d'accumulation (35) d'eau chaude de chauffage étant définie entre ladite membrane en forme de sac (34) et ladite enveloppe (20).

12. Ensemble intégré (6) selon la revendication 11, dans lequel une enceinte perforée (49) est supportée à l'intérieur de ladite enveloppe (20) de l'accumulateur (8) à une distance prédéterminée de ladite membrane en forme de sac (34).

13. Ensemble intégré (6) selon l'une quelconque des revendications 10 à 12, dans lequel l'accumulateur (8) d'eau chaude destinée au chauffage de locaux comprend en outre une cuve essentiellement cylindrique (36) qui est interposée entre l'enveloppe (20) de l'accumulateur (8) et la membrane (34).

14. Ensemble intégré (6) selon la revendication 1, dans lequel l'enveloppe (20) de l'accumulateur (8) est pourvue sur au moins une partie de sa surface extérieure d'au moins une couche (39) d'un revêtement d'isolation thermique.

15. Procédé de fabrication d'un ensemble intégré d'échangeur et d'accumulateur de chaleur (6) pour un chauffe-eau (1) comprenant un accumulateur (8) dans lequel est définie une zone d'accumulation (35) contenant une quantité prédéterminée d'eau chaude pour le chauffage de locaux, et où un échangeur eau-eau (7) pour la production d'eau chaude destinée à des appareils sanitaires forme une partie intégrante de l'enveloppe (20) de l'accumulateur (8) et se trouve au moins partiellement à l'intérieur de celle-ci, comprenant les étapes suivantes :
- fournir un premier chapeau essentiellement cylindrique (20a) de l'enveloppe (20) de l'accumulateur (8), ledit chapeau (20a) ayant un premier diamètre prédéterminé ;
- former dans le premier chapeau (20a) une pluralité de premières gorges essentiellement semi-circulaires (25) ayant un rayon prédéterminé de manière à former une première paroi (21) dudit échangeur eau-eau ;
- fournir un deuxième chapeau essentiellement cylindrique (20b) de l'enveloppe (20) de l'accumulateur (8), ledit deuxième chapeau (20b) ayant un diamètre essentiellement identique à celui du premier chapeau (20a) ;
- fixer ensemble lesdits premier (20a) et deuxième (20b) chapeaux de manière à former ladite enveloppe ;
- fournir un élément essentiellement tubulaire (51) ayant un deuxième diamètre prédéterminé supérieur au diamètre du premier chapeau (20a) de l'accumulateur (8) ;
- former une pluralité de deuxièmes gorges essentiellement semi-circulaires (26) sur ledit élément essentiellement tubulaire (51), lesdites deuxièmes gorges (26) ayant un rayon essentiellement identique à celui des premières gorges (25) ;
- fixer, sur lesdites deuxièmes gorges, (26) un conduit tubulaire ayant un rayon inférieure au rayon desdites premières (25) et deuxièmes (26) gorges.
- installer ledit élément essentiellement tubulaire (51) sur le premier chapeau (20a) de l'accumulateur (8) jusqu'à ce que chacune desdites deuxièmes gorges (26) soit juxtaposée à une première gorge correspondante (25) formée sur le premier chapeau (20a) de manière à définir une deuxième paroi (22) dudit échangeur eau-eau (7) ;
- fixer l'élément essentiellement tubulaire (51) sur le premier chapeau (20a) de l'accumulateur (8) de manière à définir un échangeur eau-eau (7) faisant partie intégrante de l'enveloppe (20) de l'accumulateur (8) et contenu dans celle-ci au moins en partie.

16. Procédé selon la revendication 15, dans lequel lesdites premières (25) et deuxièmes (26) gorges sont essentiellement constituées par les enroulements d'une gorge unique essentiellement semi-circulaire, disposées selon une spirale de pas prédéterminé.

17. Procédé selon la revendication 15, comprenant en outre les étapes consistant à former une pluralité de nervures (27, 28) essentiellement en forme de selle et ayant des espacements égaux, dans les gorges (25, 26) formées sur ledit premier chapeau (20a) et sur ledit élément essentiellement tubulaire (51) de l'échangeur eau-eau (7).

18. Procédé selon la revendication 16, dans lequel ledit élément essentiellement tubulaire (51) se monte par vissage sur le première chapeau (20a) de l'accumulateur (8).

19. Procédé selon la revendication 16, comprenant en outre l'étape consistant à chauffer ledit élément essentiellement tubulaire (51) avant de monter ledit élément (51) sur le premier chapeau (20a) de l'accumulateur (8).

20. Procédé selon la revendication 15, comprenant en outre l'étape consistant à fournir des moyens d'accumulateur (8) adaptés pour permettre l'expansion de l'eau chaude de chauffage stockée dans ladite zone d'accumulation (35) de ladite enveloppe (20).

21. Procédé selon la revendication 15, comprenant en outre l'étape consistant à poser une couche de matériau d'isolation thermique (39) sur la surface extérieure du deuxième chapeau (20b) de l'enveloppe (20) de l'accumulateur (8).

22. Chauffe-eau (1) comprenant un échangeur de chaleur gaz-eau (4) pour la production d'eau chaude destinée au chauffage de locaux, laquelle est en relation d'échange thermique avec un deuxième échangeur de chaleur (7), de type eau-eau, pour la production d'eau chaude destinée à des appareils sanitaires, au moyen d'un circuit hydraulique primaire (5), **caractérisé en ce qu'**il comprend, dans ledit circuit hydraulique primaire (5), un ensemble intégré d'échangeur et d'accumulateur de chaleur (6) selon l'une quelconque des revendications 1 à 14.
